# DEMANDE DE BREVET EUROPEEN

(11) **EP 0 727 337 A1**
(43) Date de publication de la demande: **21.08.1996**
(21) Numéro de dépôt: 96101657.3
(22) Date de dépôt: 06.02.1996
(51) Int. Cl.: B60S 1/38

(54) **Raclette d'essuyage pour un balai d'essuie-glace réalisée par moulage en au moins deux matériaux de rigidités defférentes**

(30) Priorité: 14.02.1995 FR 9501757
(71) Demandeur: PAUL JOURNEE S.A., F-60240 Reilly (FR)
(72) Inventeur: Journee, Maurice, F-60240 Reilly (FR)
(74) Mandataire: Lemaire, Marc

(57) **Abrégé**

L'invention propose une raclette d'essuyage (10) pour un balai d'essuie-glace de véhicule automobile comportant, agencés successivement le long de l'axe médian (P) de la section transversale de la raclette d'essuyage, un talon supérieur (12) de liaison de la raclette (10) à une structure (24) de support du balai d'essuie-glace, une bande médiane (16) de liaison en matériau déformable élastiquement, et une partie inférieure (14) de raclage dont le bord d'extrémité libre (26) est réalisé en matériau déformable élastiquement pour coopérer avec la surface de la vitre à essuyer, caractérisée en ce que le talon supérieur (12) est réalisé par moulage, sur la partie supérieure (32) de la bande médiane liaison (16), d'un matériau (M2) plus rigide que celui (M1) de la bande médiane de liaison (16).

## Description

La présente invention concerne une raclette d'essuyage pour un balai d'essuie-glace de véhicule automobile.

L'invention concerne plus particulièrement une raclette d'essuyage du type comportant, agencés successivement le long de l'axe médian de la section transversale de la raclette d'essuyage, un talon supérieur de fixation de la raclette à une structure de support du balai d'essuie-glace, une bande médiane de liaison en matériau déformable élastiquement, et une partie inférieure de raclage dont au moins le bord d'extrémité libre est réalisé en matériau déformable élastiquement pour coopérer avec la surface de la vitre à essuyer.

Selon une conception connue la plus couramment utilisée, l'ensemble de la raclette d'essuyage est réalisé en une seule opération de moulage, notamment par extrusion, en un matériau déformable élastiquement tel que du caoutchouc naturel ou synthétique, ou en matériau élastomère.

Cette technique de réalisation d'une raclette d'essuyage présente plusieurs inconvénients.

Le fait de réaliser le talon supérieur de liaison en matériau souple déformable élastiquement nécessite ultérieurement de renforcer ce talon par au moins un élément de renfort.

Une technique couramment utilisée consiste à insérer dans le talon supérieur une ou plusieurs vertèbres de renfort longitudinales, les vertèbres pouvant être mises en place après la réalisation du talon ou insérées dans le talon lors de l'opération de moulage.

Il est en effet nécessaire de disposer d'un talon de liaison sensiblement rigide de façon à assurer de manière fiable la liaison entre la raclette d'essuyage et la structure de support articulée et de répartition de pression du balai d'essuie-glace, le talon étant par exemple reçu dans des griffes appartenant à cette structure.

Un autre inconvénient réside dans le fait qu'un matériau déformable élastiquement, possédant des caractéristiques sélectionnées de souplesse et de fiabilité, est utilisé pour la réalisation de la totalité de la raclette alors que ces propriétés recherchées de souplesse et de déformabilité élastique ne sont réellement utiles qu'au niveau de l'extrémité inférieure de raclage ainsi que dans la partie de la bande médiane de liaison qui constitue la charnière longitudinale d'articulation de la partie inférieure de raclage par rapport au talon d'essuyage.

La présente invention a pour but de proposer une nouvelle conception d'une raclette d'essuyage du type mentionné précédemment qui permet de remédier à ces inconvénients.

Dans ce but, l'invention propose une raclette d'essuyage du type mentionné précédemment, caractérisée en ce que le talon supérieur est réalisé par moulage, sur la partie supérieure de la bande médiane de liaison, d'un matériau plus rigide que celui de la bande médiane de liaison.

Selon d'autres caractéristiques de l'invention :
- le bord d'extrémité libre de la partie inférieure de raclage est constitué par le bord inférieur de la bande médiane de liaison ;
- la partie inférieure de raclage présente, en section transversale, une forme de flèche, et elle comporte deux portions latérales opposées, de section sensiblement triangulaire, qui sont réalisées par moulage, sur la partie inférieure de la bande médiane de liaison, en un matériau plus rigide que celui de la bande médiane de liaison ;
- le talon supérieur de liaison et les portions latérales de la partie inférieure de raclage sont réalisés par moulage simultané sur la bande médiane de liaison ;
- le talon supérieur de liaison et les portions latérales de la partie inférieure de raclage sont réalisés par moulage d'un même matériau plus rigide que le matériau de la bande médiane de liaison ;
- l'opération de moulage est une opération de moulage par extrusion ;
- la bande médiane de liaison est réalisée par moulage par extrusion ;
- les faces latérales opposées de la bande médiane de liaison comportent des irrégularités de surface pour faciliter l'accrochage de chaque élément moulé de la bande médiane de liaison ;
- les irrégularités de surface sont constituées par une série de rainures longitudinales ou par une série de trous transversaux ;
- un élément moulé sur la bande médiane de liaison est réalisé dans un matériau de couleur différente de celle du matériau de la bande médiane de liaison ;
- les faces latérales opposées du talon supérieur de liaison comportent deux rainures longitudinales qui délimitent deux ailes transversales de protection de griffes de liaison appartenant à la structure de support du balai d'essuie-glace.

D'autres caractéristiques et avantages de l'invention apparaîtront à la lecture de la description détaillée qui suit pour la compréhension de laquelle on se reportera aux dessins annexés dans lesquels :
- La figure 1 est une vue schématique en perspective d'un tronçon d'une raclette d'essuyage réalisée conformément aux enseignements de l'invention et qui est illustrée en association avec une griffe de liaison ;
- la figure 2 est une vue similaire à celle de la figure 1 qui illustre une première variante de réalisation de la bande médiane de liaison ;
- la figure 3 est une vue similaire à celle de la figure 2 qui illustre une seconde variante de réalisation de la bande médiane de liaison.

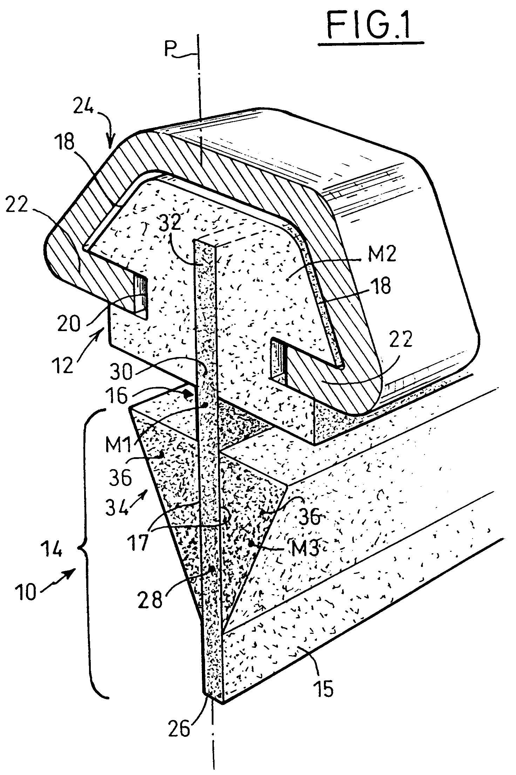

On a représenté sur la figure 1 une raclette d'essuyage 10 qui est constituée pour l'essentiel par un talon supérieur de liaison 12, par une partie inférieure de raclage 14 et par une bande médiane de liaison 16.

Cette conception générale connue d'une raclette d'essuyage présente une symétrie de réalisation par rapport à un plan longitudinal médian P de symétrie de la raclette d'essuyage.

Le talon supérieur de liaison 12 comporte, dans chacune de ses faces latérales opposées et inclinées 18, une rainure longitudinale 20 qui reçoit une patte latérale correspondante 22 appartenant à une griffe de liaison 24 d'une structure de support (non représentée) de la raclette 10 par un balai d'essuie-glace.

La bande médiane de liaison 16 est une pièce réalisée par moulage, par exemple par extrusion, dans un matériau souple déformable élastiquement qui présente de très bonnes capacités de déformation élastique ainsi qu'une très grande durée de vie.

Ces caractéristiques sont nécessaires pour que le bord d'extrémité inférieure 26 de la partie inférieure 28 de la bande médiane de liaison constitue un bord d'essuyage et de raclage de la vitre à essuyer (non représentée), et elles sont également nécessaires pour que la partie centrale 30 de la bande médiane de liaison qui s'étend entre le talon supérieur de liaison 12 et la partie inférieure de raclage 14 constitue une charnière longitudinale qui permet le pivotement autour d'un axe longitudinal de la partie inférieure de raclage 14 par rapport au talon supérieur de liaison 12.

Conformément aux enseignements de l'invention, le talon supérieur 12 est une partie massive réalisée par moulage sur la partie supérieure 32 de la bande médiane de liaison 16, ce moulage étant effectué dans un matériau M2 plus rigide que le matériau M1 constitutif de la bande médiane de liaison 16.

Le matériau M2 constitutif du talon supérieur de liaison 12 est choisi de manière que, à l'issue de l'opération de moulage, le talon supérieur de liaison 12 présente une rigidité suffisante, sans qu'il soit nécessaire de faire appel à un quelconque élément de renfort supplémentaire, pour assurer une bonne liaison et un bon maintien de la raclette d'essuyage 10 par des griffes 24 réparties régulièrement le long du talon supérieur de liaison 12.

Le talon supérieur de liaison 12 peut être moulé sur la partie supérieure 32 de la bande médiane de liaison 16 après la réalisation de cette dernière, ou être moulé simultanément avec cette dernière, par exemple selon la technique du moulage par co-extrusion, également appelée extrusion bi-matières.

Selon une conception connue, la partie inférieure de raclage 14 présente une forme de flèche, dirigée vers le bas en considérant la figure 1, dont la pointe 15 est constituée par le bas de la partie inférieure 28 de la bande médiane de liaison 16.

Comme dans le cas du talon supérieur de liaison 12, la partie massive 34 de la partie inférieure de raclage 14 en forme de flèche est constituée par deux portions latérales opposées 36, de forme sensiblement triangulaire, qui sont réalisées par moulage sur les faces latérales opposées 17 de la bande médiane de liaison 16.

Le matériau M3 constitutif des portions latérales triangulaires 36 est ici encore un matériau plus rigide que celui M1 constitutif de la bande médiane de liaison, et donc un matériau moins chère.

Le matériau M3 peut être le même que le matériau M2.

Comme dans le cas du talon supérieur de liaison 12, les portions latérales opposées 36 de la partie inférieure de raclage 14 peuvent être réalisées par moulage sur une bande médiane de liaison déjà réalisée, ou réalisée selon la technique de co-extrusion.

Conformément aux enseignements de l'invention, la réalisation par moulage en un matériau différent de celui de bande médiane de liaison 16, du talon supérieur 12, et des portions latérales 36 de la partie inférieure de raclage 14, permet de faire appel à un matériau plus rigide et moins chère que l'élastomère constitutif de la bande médiane de liaison 16.

Le fait de faire appel à des matériaux de moulage différents permet également de réaliser le talon supérieur de liaison 12 et/ou les portions latérales 36 de la partie inférieure de raclage 14 dans une couleur différente de celle, généralement noire, de la bande médiane de liaison 16.

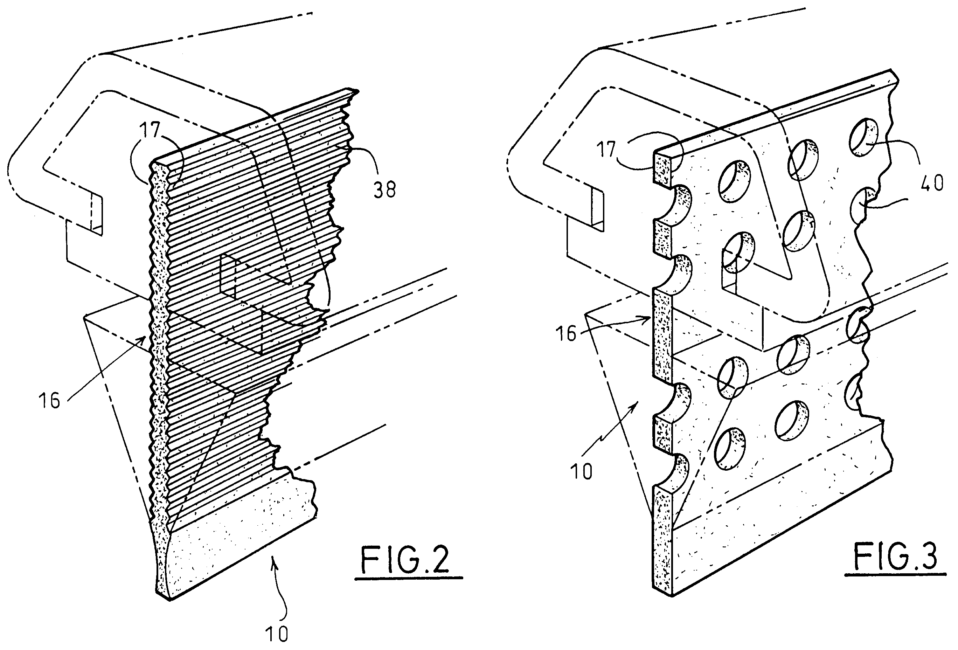

Afin d'améliorer la qualité de l'accrochage des parties 12, 36 surmoulées sur la bande de liaison, et comme cela est illustré sur la figure 2, il est possible de prévoir sur les faces latérales opposées de ces dernières des irrégularités de surface qui sont par exemple réalisées sous la forme de séries de rainures longitudinales 38.

Dans la seconde variante de réalisation illustrée sur la figure 3, les aspérités ou irrégularités de surface sont constituées par une série de trous transversaux débouchant 40.

## Revendications

1. Raclette d'essuyage (10) pour un balai d'essuie-glace de véhicule automobile comportant, agencés successivement le long de l'axe médian (P) de la section transversale de la raclette d'essuyage, un talon supérieur (12) de liaison de la raclette (10) à une structure (24) de support du balai d'essuie-glace, une bande médiane (16) de liaison en matériau déformable élastiquement, et une partie inférieure (14) de raclage dont au moins le bord d'extrémité libre (26) est réalisé en matériau déformable élastiquement pour coopérer avec la surface de la vitre à essuyer, caractérisée en ce que le talon supérieur (12) est réalisé par moulage, sur la partie supérieure (32) de la bande médiane liaison (16), d'un matériau (M2) plus rigide que celui (M1) de la bande médiane de liaison (16).

2. Raclette d'essuyage selon la revendication 1, caractérisée en ce que le bord d'extrémité libre (26) de la partie inférieure de raclage (14) est constitué par le bord inférieur (26) de la bande médiane de liaison (16).

3. Raclette d'essuyage selon la revendication 2, caractérisée en ce que la partie inférieure de raclage (14) présente, en section transversale, une forme de flèche, et en ce qu'elle comporte deux portions latérales opposées (36) de section sensiblement triangulaire qui sont réalisées par moulage, sur la partie inférieure (28) de la bande médiane de liaison (16), en un matériau (M3) plus rigide que celui (M1) de la bande médiane de liaison (16).

4. Raclette d'essuyage selon la revendication 3, caractérisée en ce que le talon supérieur de liaison (12) et les portions latérales (36) de la partie inférieure de raclage (14) sont réalisés par moulage simultané sur la bande médiane de liaison (16).

5. Raclette d'essuyage selon la revendication 4, caractérisée en ce que le talon supérieur de liaison (12) et les portions latérales (36) de la partie inférieure de raclage (14) sont réalisés par moulage d'un même matériau (M2, M3) plus rigide que le matériau (M1) de la bande médiane de liaison (16).

6. Raclette d'essuyage selon l'une quelconque des revendications précédentes, caractérisée en ce que l'opération de moulage est une opération de moulage par extrusion.

7. Raclette d'essuyage selon l'une quelconque des revendications précédentes, caractérisée en ce que la bande médiane de liaison (16) est réalisée par moulage par extrusion.

8. Raclette d'essuyage selon l'une quelconque des revendications précédentes, caractérisée en ce que les faces latérales opposées (17) de la bande médiane de liaison (16) comportent des irrégularités de surface pour faciliter l'accrochage de chaque élément (12, 36) moulé sur la bande médiane de liaison (16).

9. Raclette d'essuyage selon la revendication 8, caractérisée en ce que les irrégularités de surface sont constituées par une série de rainures longitudinales (38).

10. Raclette d'essuyage selon la revendication 8, caractérisée en ce que les irrégularités de surface sont constituées par une série de trous transversaux (40).

11. Raclette d'essuyage selon l'une quelconque des revendications précédentes, caractérisée en ce qu'un élément (12, 36) moulé sur la bande médiane de liaison (16) est réalisé dans un matériau (M2, M3) de couleur différente de celle du matériau (M1) de la bande médiane de liaison.

12. Raclette d'essuyage selon l'une quelconque des revendications précédentes, caractérisée en ce que les faces latérales opposées (18) du talon supérieur de liaison (12) comportent deux rainures longitudinales (20) qui délimitent deux ailes transversales de protection de griffes de liaison (24) appartenant à la structure de support de balai d'essuie-glace.
